# DEMANDE DE BREVET EUROPEEN

(11) **EP 3 236 347 A1**
(43) Date de publication de la demande: **25.10.2017**
(21) Numéro de dépôt: 17165744.8
(22) Date de dépôt: 10.04.2017
(51) Int. Cl.: G06F 3/16, G06F 9/44

(54) **PROCÉDÉ D'ASSISTANCE SONORE D'INTERFACE DE CONTRÔLE D'UN TERMINAL, UN PROGRAMME ET UN TERMINAL**

(30) Priorité: 18.04.2016 FR 1653414
(71) Demandeur: Orange, 75015 Paris (FR)
(72) Inventeur: BOTHEREL, Valérie, 22450 Mantallot (FR); LOUIS DIT PICARD, Stéphane, 35650 Le Rheu (FR); LE RAZAVET, Danielle, 22300 Lannion (FR)

(57) **Abrégé**

L'invention concerne un procédé d'assistance sonore d'interface de contrôle d'un terminal, un programme et un terminal. Notamment, l'assistance sonore est fournie pour une interface de contrôle d'un traitement mis en oeuvre par le terminal.

Un objet de l'invention est un procédé d'assistance sonore d'interface de contrôle d'un terminal, ledit procédé d'assistance sonore comporte, suite au déclenchement d'une exécution par le terminal d'un traitement activant une interface de contrôle permettant à un utilisateur du terminal d'interagir avec le traitement exécuté, une fourniture à l'interface de contrôle active d'un contrôleur d'activation d'assistance permettant à l'utilisateur du terminal d'activer une assistance sonore adaptée à l'interface de contrôle active.

Ainsi, le risque d'erreur d'interaction est réduit car l'utilisateur peut activer plus facilement l'assistance sonore puisqu'il n'a pas besoin de revenir aux paramètres du système du terminal pour activer l'assistance sonore.

## Description

L'invention concerne un procédé d'assistance sonore d'interface de contrôle d'un terminal, un programme et un terminal. Notamment, l'assistance sonore est fournie pour une interface de contrôle d'un traitement mis en oeuvre par le terminal.

L'intégration d'éléments sonores dans des interfaces d'un terminal tel qu'un ordinateur ou un smartphone est actuellement effectuée en associant un élément sonore à une fonction. Elle permet de fournir à l'utilisateur une information sonore sur un état du service, une notification sonore du service, un retour sonore sur une action de l'utilisateur relativement au service.

Des éléments sonores sont disponibles dans l'environnement bureautique tel que Windows quel que soit le système ou OS (notamment iOS, Android...). Les éléments sonores sont alors associés à des actions de l'utilisateur. Cela signifie que les éléments sonores sont déclenchés par une action de l'utilisateur et donc entendus par l'utilisateur après une action de sa part sur l'interface du terminal. Il s'agit donc de retour sonore sur l'action réalisée, tel que par exemple, le bruit de papier froissé entendu après avoir demandé la suppression d'un fichier.

Pour activer, désactiver, modifier ces éléments sonores (synthèse vocale, évènements audio), l'utilisateur du terminal doit ouvrir la fenêtre de paramétrage du système (iOS, Android...) du terminal.

Il existe aussi des solutions pour aveugles ou malvoyants avec des procédés comme TalkBack sur Android ou VoiceOver sur IOS... Ces environnements dédiés aux personnes aveugles ou malvoyantes génèrent de la synthèse vocale pour permettre à l'utilisateur d'explorer toute l'interface et entendre vocalement les informations contenues sur l'écran pour pouvoir sélectionner les actions souhaitées.

Afin de permettre aisément à l'utilisateur d'accéder à l'assistance vocale, les actions simples de sélection (clic de souris, tap tactile...) et de défilement (glissé avec un doigt, déplacement de la souris...) sont réservées à l'assistance vocale. Par conséquent, dans ces environnements spécifiques d'assistance vocale, les règles de défilement classiques proposées par les interfaces sont changées. L'exploration se fait par déplacement du focus, le défilement sur plusieurs pages (c'est-à-dire au-delà de la zone visible de l'écran) ne se fait plus pas un simple glisser d'un doigt mais par un geste dédié inconnu du grand public tel que un glissé de 3 doigts simultanément en contact avec l'écran. L'utilisateur du terminal mettant en oeuvre cette assistance vocale doit alors apprendre les normes d'interaction spécifiques à cet environnement avec des risques d'erreurs dans les services fournis liés à des manipulations erronées ou à une manipulation intervenant après une période de temps supérieur à une temporisation prévue par une interface lors de son affichage...

En outre, pour activer/désactiver cet environnement d'assistance vocale, l'utilisateur du terminal doit aller dans les paramètres d'accessibilité du terminal.

Un des buts de la présente invention est d'apporter des améliorations par rapport à l'état de la technique.

Un objet de l'invention est un procédé d'assistance sonore d'interface de contrôle d'un terminal, ledit procédé d'assistance sonore comporte, suite au déclenchement d'une exécution par le terminal d'un traitement activant une interface de contrôle permettant à un utilisateur du terminal d'interagir avec le traitement exécuté, une fourniture à l'interface de contrôle active d'un contrôleur d'activation d'assistance permettant à l'utilisateur du terminal d'activer une assistance sonore adaptée à l'interface de contrôle active.

Ainsi, le risque d'erreur d'interaction est réduit car l'utilisateur peut activer plus facilement l'assistance sonore puisqu'il n'a pas besoin de revenir aux paramètres du système du terminal pour activer l'assistance sonore.

Avantageusement, le procédé d'assistance sonore comporte, suite à une activation d'une assistance sonore d'une interface de contrôle active d'un traitement exécuté par le terminal, une fourniture à une interface active du traitement exécuté d'un contrôleur de désactivation d'assistance permettant à l'utilisateur du terminal de désactiver l'assistance sonore de l'interface de contrôle du traitement exécuté.

Ainsi, le risque d'erreur d'interaction est réduit car l'utilisateur peut désactiver plus facilement l'assistance sonore puisqu'il n'a pas besoin de revenir aux paramètres du système du terminal pour désactiver l'assistance sonore.

En outre, l'interface d'assistance sonore d'un traitement ne nécessite pas de prévoir des contrôleurs spécifiques pour déclencher l'exécution des sous-traitements du traitement puisque l'utilisateur bascule facilement de l'interface de contrôle d'un traitement à l'interface d'assistance sonore du traitement.

Avantageusement, le procédé d'assistance sonore comporte suite à une activation d'une assistance sonore, un remplacement, uniquement et au moins pour l'un des contrôleurs de sélection de l'interface de contrôle active, d'un déclenchement d'une exécution d'un sous-traitement associé au contrôleur de sélection de l'interface de contrôle active par un déclenchement d'une reproduction sonore de données descriptives relatives au sous-traitement associé au contrôleur de sélection.

Ainsi, l'assistance sonore est fourni non pas sur une seule page de l'interface de contrôle du traitement mais sur toutes ses pages lorsqu'elle en comporte plusieurs et sans nécessité l'ajout de contrôleur de défilement spécifique pour l'interface d'assistance sonore.

Avantageusement, le procédé d'assistance sonore comporte une génération d'une interface d'assistance sonore à partir d'une modification uniquement des contrôleurs de sélection de l'interface de contrôle active.

Ainsi, l'interface d'assistance sonore est généré non pas pour une seule page de l'interface de contrôle du traitement mais pour toutes ses pages lorsqu'elle en comporte plusieurs et sans nécessité d'ajout de contrôleur de défilement spécifique pour l'interface d'assistance sonore.

Avantageusement, la génération d'une interface d'assistance sonore pour une interface de contrôle d'un traitement est déclenchée dès qu'au moins un des événements suivants se produit:
- Une activation d'une assistance sonore à partir d'une interface de contrôle d'un traitement ;
- Une installation du procédé d'assistance sonore sur le terminal ;
- Une installation d'un traitement sur le terminal ;
- Une mise à jour d'un traitement sur le terminal.

Ainsi, le déclenchement de la génération d'une interface d'assistance sonore dès l'activation d'une assistance sonore à partir d'une interface de contrôle limite la génération d'interface d'assistance sonore uniquement à celles utilisées.

Alors que le déclenchement de la génération d'une interface d'assistance sonore suite à une installation du procédé d'assistance sonore et/ou d'un traitement et/ou d'une mise à jour d'un traitement sur le terminal permet de réduire le délai de mise en oeuvre de l'assistance sonore lors de son activation.

Avantageusement, la génération de l'interface d'assistance sonore comporte un stockage dans le terminal en association avec le traitement de l'interface d'assistance sonore générée, permettant qu'une activation ultérieure de l'assistance sonore pour l'interface de contrôle du traitement déclenche la mise en oeuvre de l'interface d'assistance sonore stockée en association avec le traitement.

Ainsi, le stockage d'une interface d'assistance sonore déjà générée permet de réduire le délai de mise en oeuvre de l'assistance sonore lors de son activation. En outre, cette réduction du délai est possible tout en réduisant l'utilisation des ressources lors que la génération est déclenchée uniquement sur activation de l'assistance sonore. En effet, une première activation d'assistance sonore déclenche la génération d'une interface d'assistance sonore uniquement pour ce traitement limitant le nombre d'interfaces d'assistance sonore générées et stockées relativement au nombre de traitements disponibles sur le terminal. Le stockage de cette interface d'assistance sonore générée lors d'une première activation permet de l'utiliser sans délai de génération lors des activations ultérieures.

Avantageusement, le procédé d'assistance sonore comporte une activation de l'assistance sonore sur commande d'un utilisateur du terminal déclenchant une reproduction d'une interface d'assistance sonore pour le traitement en cours d'exécution, l'interface d'assistance sonore ayant été générée à partir d'une modification uniquement des contrôleurs de sélection de l'interface de contrôle active.

Ainsi, l'utilisateur commande la reproduction d'une interface propre à l'assistance sonore qui est une copie conforme de l'interface pour laquelle l'assistance est fournie facilitant l'apprentissage de l'interface de contrôle au moyen de l'assistance sonore.

Avantageusement, le procédé d'assistance sonore comporte une activation de l'assistance sonore sur commande d'un utilisateur du terminal déclenchant une reproduction d'une interface d'assistance sonore en superposition à l'interface de contrôle active reproduite, l'interface d'assistance sonore ayant été générée à partir d'une modification uniquement des contrôleurs de sélection de l'interface de contrôle active.

Ainsi, l'utilisateur commande la reproduction en superposition d'une interface propre à l'assistance sonore qui est une copie conforme de l'interface pour laquelle l'assistance est fournie facilitant l'apprentissage de l'interface de contrôle au moyen de l'assistance sonore non seulement en raison de la copie conforme mais aussi de la superposition permettant à l'utilisateur de se familiariser avec l'interface de contrôle.

Avantageusement, l'interface de contrôle est au moins d'un des types suivants:
- Une interface graphique,
- Une interface tactile.

Un objet de l'invention est encore un procédé de traitement apte à être exécuté par un terminal, le procédé de traitement comportant une activation d'une interface de contrôle d'un terminal permettant à un utilisateur du terminal d'interagir avec le procédé de traitement exécuté, caractérisé en ce que le procédé de traitement comporte, suite au déclenchement d'une exécution par le terminal du procédé de traitement, une fourniture à l'interface de contrôle active d'un contrôleur d'activation d'une assistance sonore permettant à l'utilisateur du terminal d'activer une assistance sonore adaptée à l'interface de contrôle active.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un terminal et étant conçus pour commander l'exécution des différentes étapes de ce procédé.

L'invention vise donc aussi un programme comprenant des instructions de code de programme pour l'exécution des étapes du procédé d'assistance sonore et/ou du procédé de traitement lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un terminal comportant :
- un processeur exécutant au moins un traitement ;
- au moins une interface de contrôle d'un des au moins un traitement ;
caractérisé en ce que le terminal comporte un assistant sonore d'interface de contrôle, l'assistance sonore fournissant, suite au déclenchement d'une exécution par le terminal d'un traitement activant une interface de contrôle permettant à un utilisateur du terminal d'interagir avec le traitement exécuté, à l'interface de contrôle active un contrôleur d'activation d'assistance permettant à l'utilisateur du terminal d'activer une assistance sonore adaptée à l'interface de contrôle active.

Les caractéristiques et avantages de l'invention apparaîtront plus clairement à la lecture de la description, faite à titre d'exemple, et des figures s'y rapportant qui représentent :
- Figures 1a et 1b, des schémas simplifiés d'un procédé d'assistance sonore d'une interface de contrôle d'un terminal, selon l'invention, respectivement délivré ou non au moyen d'une interface d'assistance sonore selon l'invention;
- Figures 2a et 2b, un schéma simplifié des échanges dans un terminal mettant en oeuvre l'invention, respectivement lors du démarrage de l'exécution d'un traitement par le terminal, lors de l'activation de l'assistant sonore pour la figure 2a, et lorsque l'assistant sonore est actif, lors et après l'arrêt de l'assistant sonore pour la figure 2b ;
- Figure 3, un schéma simplifié d'un terminal comportant un assistant sonore selon l'invention ;
- Figures 4a, 4b et 4c, des exemples d'interfaces d'assistance sonore selon l'invention, respectivement pour un traitement de type application pour smartphone pour les figures 4a et 4b, pour une page internet afficher par un navigateur sur une tablette ou un ordinateur.

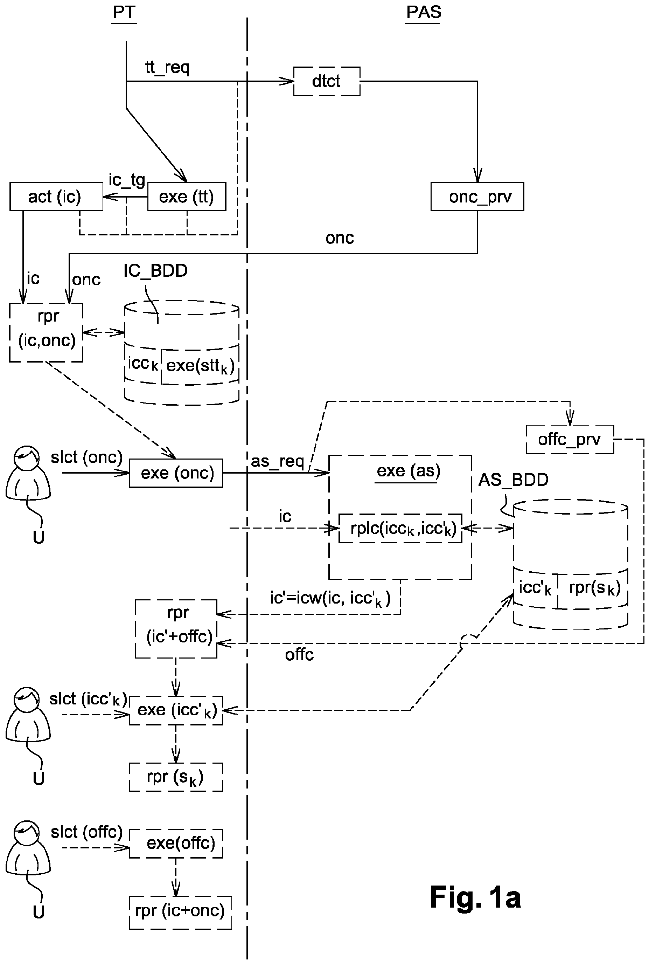

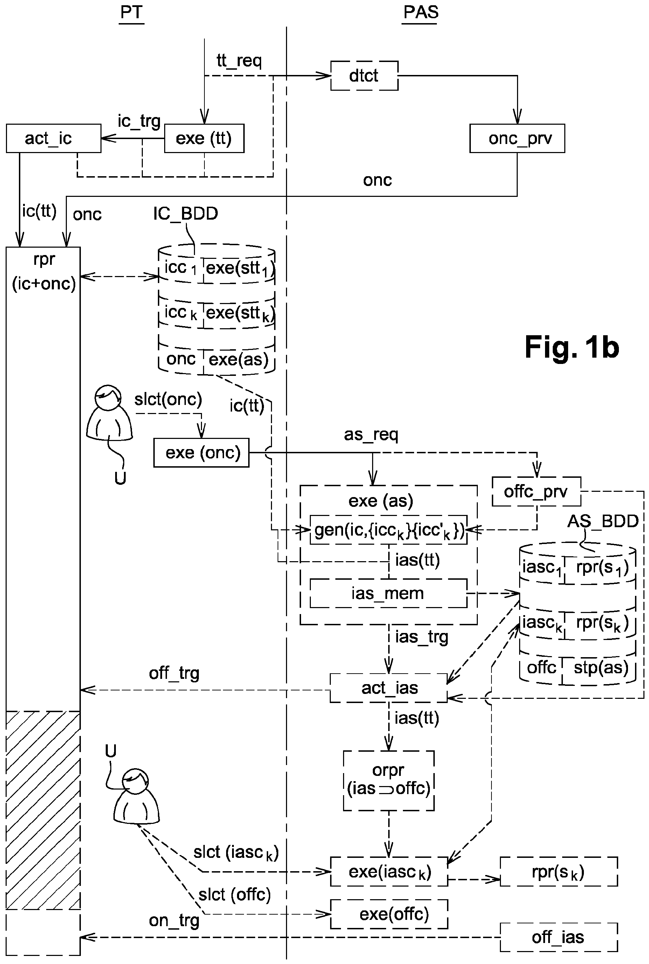

Les figures 1a et 1b illustrent des schémas simplifiés d'un procédé d'assistance sonore PAS d'une interface de contrôle d'un terminal, selon l'invention. La figure 1a illustre un schéma simplifié d'un procédé d'assistance sonore PAS d'une interface de contrôle d'un terminal dans lequel l'assistance sonore est délivrée sur l'interface de contrôle.

Le procédé d'assistance sonore PAS comporte, suite au déclenchement *tt_req* d'une exécution exe(tt) par le terminal d'un traitement activant act(ic) une interface de contrôle permettant à un utilisateur du terminal d'interagir avec le traitement exécuté, une fourniture onc_prv à l'interface de contrôle active d'un contrôleur d'activation d'assistance *onc* permettant à l'utilisateur du terminal d'activer une assistance sonore adaptée à l'interface de contrôle active.

En particulier, le procédé d'assistance sonore PAS comporte, suite à une activation d'une assistance sonore *as*_*req* d'une interface de contrôle active d'un traitement exécuté par le terminal, une fourniture offc_prv à une interface active du traitement exécuté d'un contrôleur de désactivation offc d'assistance permettant à l'utilisateur du terminal de désactiver l'assistance sonore de l'interface de contrôle du traitement exécuté.

En particulier, le procédé d'assistance sonore PAS comporte, suite à une activation d'une assistance sonore, un remplacement rplc(iccₖ,icc'ₖ), uniquement et au moins pour l'un des contrôleurs de sélection de l'interface de contrôle active iccₖ, d'un déclenchement d'une exécution d'un sous-traitement associée exe(sttₖ) au contrôleur de sélection iccₖ de l'interface de contrôle active par un déclenchement d'une reproduction sonore de données descriptives rpr(sₖ) relatives au sous-traitement associé au contrôleur de sélection iccₖ.

En particulier, l'interface de contrôle ic est au moins d'un des types suivants:
- Une interface graphique (par interface graphique, dite aussi interface visuelle, est entendue une interface lisible tel qu'une interface affichable),
- Une interface tactile.

Le procédé d'assistance sonore PAS selon l'invention est proposé pour au moins un procédé de traitement PT apte à être exécuté par un terminal, le procédé de traitement PT comportant une activation act(ic) d'une interface de contrôle d'un terminal permettant à un utilisateur du terminal d'interagir avec le procédé de traitement exécuté.

En particulier, un procédé de traitement PT comporte une exécution d'un traitement exe(tt) suite à une requête de démarrage du traitement *tt_req* provenant notamment d'une interface de contrôle du terminal. Un utilisateur U demande notamment l'exécution du traitement en sélectionnant un contrôleur de sélection de l'interface de contrôle du terminal associé au déclenchement de l'exécution du traitement.

Si le traitement tt exécuté nécessite une interaction avec l'utilisateur, l'exécution du traitement exe(tt) déclenche *ic_trg,* éventuellement, une activation une interface de contrôle propre au traitement act(ic).

En particulier, la requête de traitement *tt_req* ou l'exécution du traitement exe(tt) ou le déclenchement de l'activation de l'interface de contrôle *ic_trg* ou l'activation de l'interface de contrôle act(ic) déclenche directement ou indirectement la fourniture du contrôleur d'activation d'assistance sonore à l'interface de contrôle onc-prv.

En particulier, le procédé d'assistance sonore PAS comporte une détection dtct de déclenchement de l'exécution par le terminal d'un traitement activant une interface de contrôle permettant à un utilisateur du terminal d'interagir avec le traitement exécuté. Notamment, la détection détecte soit l'un des signaux de requête de traitement *tt_req* ou de déclenchement de l'activation de l'interface de contrôle *ic_trg,* soit l'exécution du traitement exe(tt) ou l'activation de l'interface de contrôle act(ic).

En particulier, un procédé de traitement PT selon l'invention comporte une ou plusieurs des étapes du procédé d'assistance sonore PAS. Notamment, le procédé de traitement PT selon l'invention comporte, suite au déclenchement *tt_req* d'une exécution par le terminal du procédé de traitement, une fourniture onc_prv à l'interface de contrôle active d'un contrôleur d'activation d'une assistance sonore permettant à l'utilisateur du terminal d'activer une assistance sonore adaptée à l'interface de contrôle active. Dans le cas où le procédé d'assistance sonore comporte une détection dtct, le contrôle d'activation d'assistance onc est fourni à l'interface de contrôle active détectée.

Ainsi, le procédé de traitement PT fournit une interface de contrôle rpr(ic+onc) du traitement comportant un contrôleur d'activation d'assistance sonore. La fourniture de l'interface de contrôle du traitement comporte l'association d'un ou plusieurs contrôleurs d'une interface de contrôle d'un terminal (bouton poussoir, zone d'un écran...) à l'exécution de sous-traitement(s) du traitement exécuté et, notamment, la reproduction de l'interface de contrôle du traitement sur un écran dans le cas d'une interface graphique et/ou tactile.

En particulier, la fourniture de l'interface de contrôle d'un traitement repr(ic+onc) utilise une base de données d'interface de contrôle IC_BDD dans laquelle sont stockées chaque association d'un contrôleur d'une interface de contrôle d'un terminal pour un traitement donné iccₖ à l'exécution de sous-traitement(s) du traitement donné exe(sttₖ).

En particulier, si l'interface de contrôle est une interface graphique, le contrôleur d'activation est une zone de l'interface graphique, un bouton poussoir du terminal... associé à l'activation de l'assistance sonore. Dans le cas de la zone de l'interface graphique, un texte sera éventuellement affiché sur cette zone permettant à l'utilisateur du terminal de comprendre que la sélection de cette zone soit associée à l'activation de l'assistance sonore. La zone ou le bouton associé à l'activation est, par exemple, choisi dans un angle de l'interface de contrôle afin de faciliter son accès à l'utilisateur (en particulier malvoyant).

En particulier, le procédé d'assistance sonore PAS comporte une activation d'une assistance sonore exe(as) adaptée à l'interface de contrôle active sur commande du contrôleur d'activation *onc* fourni par un utilisateur du terminal. Notamment, un utilisateur U du terminal exécutant un traitement demande l'activation de l'assistance sonore en sélectionnant le contrôleur d'activation slct(onc).

En particulier, le procédé de traitement comporte, suite à cette demande slct(onc), une exécution du contrôleur exe(onc) déclenchant *as*_*req* l'activation de l'assistance sonore, notamment l'exécution de l'assistance sonore exe(as).

En particulier, l'exécution de l'assistance sonore exe(as) comporte notamment le remplacement rplc dans au moins un contrôleur iccₖ de sélection de l'interface de contrôle active de l'exécution d'un sous-traitement associé exe(sstₖ) par une reproduction sonore d'un descriptif du sous traitement associé rpr(sₖ). Cette nouvelle association est notamment stockée dans une base de données d'assistance AS_BDD.

En particulier, dans le cas d'une interface graphique, le remplacement rplc dans un contrôleur iccₖ comporte en outre l'ajout de données graphiques dg⁺ₖ aux données graphiques associées dgₖ au contrôleur modifié icc'ₖ par ce remplacement. Ainsi, les données graphiques modifiées (dgₖ,dg⁺ₖ) reproduites sur l'interface de contrôle modifiée ic' par l'assistance sonore lors du remplacement rplc permettent à l'utilisateur d'identifier le(s) contrôleur(s) pour le(s)quel(s) une assistance sonore est fournie.

En particulier, l'exécution de l'assistance sonore fournit les données de l'interface de contrôle modifiée ic' par ce remplacement afin que l'interface de contrôle modifiée soit activée et proposée à l'utilisateur U du terminal.

En particulier, le procédé d'assistance sonore PAS comporte, suite à une activation d'une assistance sonore *as*_*req*, une fourniture offc_prv à une interface active, en l'occurrence à l'interface de contrôle modifiée du traitement exécuté ic', d'un contrôleur de désactivation d'assistance offc.

Alors, le procédé de traitement PT comporte la fourniture rpr(ic'+offc) de l'interface de contrôle modifiée ic' intégrant le contrôleur de désactivation offc.

En particulier, un utilisateur souhaitant une assistance sonore relative à un contrôleur iccₖ de l'interface de contrôle sélectionne le contrôleur correspondant *slct(icc'ₖ)* sur l'interface de contrôle modifiée fournie ic'. Cette sélection *slct(icc'ₖ)* entraine une exécution du contrôleur modifié exe(icc'ₖ) par le procédé de traitement PT qui déclenche la reproduction sonore du descriptif du sous-traitement associé au contrôleur rpr(sₖ). La reproduction sonore du descriptif est notamment une vocalisation du descriptif affiché ou un bruit associé au sous-traitement (par exemple un bruit de pièce de monnaie s'entrechoquant pour un paiement, un froissement de papier pour une suppression, un « clink » pour une création...).

En particulier, le procédé de traitement et/ou le procédé d'assistance sonore comporte une désactivation de l'assistance sonore exe(offc) sur commande du contrôleur de désactivation *offc* fourni par un utilisateur du terminal. Notamment, un utilisateur U du terminal exécutant un traitement demande une désactivation de l'assistance sonore en sélectionnant le contrôleur d'activation slct(offc). La désactivation exe(offc) déclenche alors la fourniture de l'interface de contrôle rpr(ic+onc) du traitement comportant le contrôleur d'activation d'assistance sonore par le procédé de traitement PT.

Le procédé d'assistance sonore selon l'invention fournit au moins un contrôleur permettant de déclencher l'activation ou la désactivation d'assistance sonore. Dans le cas où le procédé d'assistance sonore fournit, par exemple, un seul contrôleur disposant d'au moins deux statuts, le déclenchement d'une activation ou d'une désactivation de l'assistance sonore est fonction du statut du contrôleur. Par exemple, lorsque le statut du contrôleur passe d'un statut désactivé à un statut activé ou d'un statut 0 à un statut 1..., il déclenche l'activation de l'assistance sonore. Inversement, lorsque le statut du contrôleur passe d'un statut activé à un statut désactivé ou d'un statut 1 à un statut 0..., il déclenche la désactivation de l'assistance sonore.

La figure 1b illustre un schéma simplifié d'un procédé d'assistance sonore d'une interface de contrôle d'un terminal dans lequel l'assistance sonore est délivrée sur une interface spécifique d'assistance sonore selon l'invention.

Le procédé d'assistance sonore PAS comporte, suite au déclenchement *tt_req* d'une exécution exe(tt) par le terminal d'un traitement activant act(ic) une interface de contrôle permettant à un utilisateur du terminal d'interagir avec le traitement exécuté, une fourniture onc_prv à l'interface de contrôle active d'un contrôleur d'activation d'assistance *onc* permettant à l'utilisateur du terminal d'activer une assistance sonore adaptée à l'interface de contrôle active.

En particulier, le procédé d'assistance sonore PAS comporte, suite à une activation d'une assistance sonore *as*_*req* d'une interface de contrôle active d'un traitement exécuté par le terminal, une fourniture offc_prv à une interface active du traitement exécuté d'un contrôleur de désactivation offc d'assistance permettant à l'utilisateur du terminal de désactiver l'assistance sonore de l'interface de contrôle du traitement exécuté.

En particulier, le procédé d'assistance sonore PAS comporte, suite à une activation d'une assistance sonore, un remplacement rplc(iccₖ,icc'ₖ), uniquement et au moins pour l'un des contrôleurs de sélection de l'interface de contrôle active iccₖ, d'un déclenchement d'une exécution d'un sous-traitement associée exe(sttₖ) au contrôleur de sélection iccₖ de l'interface de contrôle active par un déclenchement d'une reproduction sonore de données descriptives rpr(sₖ) relatives au sous-traitement associé au contrôleur de sélection iccₖ.

En particulier, l'interface de contrôle ic est au moins d'un des types suivants:
- Une interface tactile,
- Une interface graphique.

Le procédé d'assistance sonore PAS selon l'invention est proposé pour au moins un procédé de traitement PT apte à être exécuté par un terminal, le procédé de traitement PT comportant une activation act(ic) d'une interface de contrôle d'un terminal permettant à un utilisateur du terminal d'interagir avec le procédé de traitement exécuté.

En particulier, un procédé de traitement PT comporte une exécution d'un traitement exe(tt) suite à une requête de démarrage du traitement *tt_req* provenant notamment d'une interface de contrôle du terminal. Un utilisateur U demande notamment l'exécution du traitement en sélectionnant un contrôleur de sélection de l'interface de contrôle du terminal associé au déclenchement de l'exécution du traitement.

Si le traitement tt exécuté nécessite une interaction avec l'utilisateur, l'exécution du traitement exe(tt) déclenche *ic_trg,* éventuellement, une activation une interface de contrôle propre au traitement act(ic).

En particulier, la requête de traitement *tt_req* ou l'exécution du traitement exe(tt) ou le déclenchement de l'activation de l'interface de contrôle *ic_trg* ou l'activation de l'interface de contrôle act(ic) déclenche directement ou indirectement la fourniture du contrôleur d'activation d'assistance sonore à l'interface de contrôle onc-prv.

En particulier, le procédé d'assistance sonore PAS comporte une détection dtct de déclenchement de l'exécution par le terminal d'un traitement activant une interface de contrôle permettant à un utilisateur du terminal d'interagir avec le traitement exécuté. Notamment, la détection détecte soit l'un des signaux de requête de traitement *tt_req* ou de déclenchement de l'activation de l'interface de contrôle *ic_trg,* soit l'exécution du traitement exe(tt) ou l'activation de l'interface de contrôle act(ic).

En particulier, un procédé de traitement PT selon l'invention comporte une ou plusieurs des étapes du procédé d'assistance sonore PAS. Notamment, le procédé de traitement PT selon l'invention comporte, suite au déclenchement *tt_req* d'une exécution par le terminal du procédé de traitement, une fourniture onc_prv à l'interface de contrôle active d'un contrôleur d'activation d'une assistance sonore permettant à l'utilisateur du terminal d'activer une assistance sonore adaptée à l'interface de contrôle active. Dans le cas où le procédé d'assistance sonore comporte une détection dtct, le contrôle d'activation d'assistance onc est fourni à l'interface de contrôle active détectée.

Ainsi, le procédé de traitement PT fournit une interface de contrôle rpr(ic+onc) du traitement comportant un contrôleur d'activation d'assistance sonore. La fourniture de l'interface de contrôle du traitement comporte l'association d'un ou plusieurs contrôleurs d'une interface de contrôle d'un terminal (bouton poussoir, zone d'un écran...) à l'exécution de sous-traitement(s) du traitement exécuté et, notamment, la reproduction de l'interface de contrôle du traitement sur un écran dans le cas d'une interface graphique et/ou tactile.

En particulier, la fourniture de l'interface de contrôle d'un traitement repr(ic+onc) utilise une base de données d'interface de contrôle IC_BDD dans laquelle sont stockées chaque association d'un contrôleur d'une interface de contrôle d'un terminal pour un traitement donné iccₖ à l'exécution de sous-traitement(s) du traitement donné exe(sttₖ).

En particulier, si l'interface de contrôle est une interface graphique, le contrôleur d'activation est une zone de l'interface graphique, un bouton poussoir du terminal... associé à l'activation de l'assistance sonore. Dans le cas de la zone de l'interface graphique, un texte sera éventuellement affiché sur cette zone permettant à l'utilisateur du terminal de comprendre que la sélection de cette zone soit associée à l'activation de l'assistance sonore. La zone ou le bouton associé à l'activation est, par exemple, choisi dans un angle de l'interface de contrôle afin de faciliter son accès à l'utilisateur (en particulier malvoyant).

En particulier, le procédé d'assistance sonore PAS comporte une activation d'une assistance sonore exe(as) adaptée à l'interface de contrôle active sur commande du contrôleur d'activation *onc* fourni par un utilisateur du terminal. Notamment, un utilisateur U du terminal exécutant un traitement demande l'activation de l'assistance sonore en sélectionnant le contrôleur d'activation slct(onc).

En particulier, le procédé de traitement comporte, suite à cette demande slct(onc), une exécution du contrôleur exe(onc) déclenchant *as*_*req* l'activation de l'assistance sonore, notamment l'exécution de l'assistance sonore exe(as).

En particulier, l'exécution de l'assistance sonore exe(as) comporte notamment le remplacement rplc dans au moins un contrôleur iccₖ de sélection de l'interface de contrôle active de l'exécution d'un sous-traitement associé exe(sstₖ) par une reproduction sonore d'un descriptif du sous traitement associé rpr(sₖ). Cette nouvelle association est notamment stockée dans une base de données d'assistance AS_BDD.

En particulier, le procédé d'assistance sonore comporte une génération gen(ic,{iccₖ},{icc'ₖ}) d'une interface d'assistance sonore ias(tt) à partir d'une modification uniquement des contrôleurs de sélection iccₖ de l'interface de contrôle active.

En particulier, la génération gen d'une interface d'assistance sonore pour une interface de contrôle d'un traitement ic est déclenchée dès qu'au moins un des événements suivants se produit:
- Une activation *as*_*req* d'une assistance sonore à partir d'une interface de contrôle d'un traitement ;
- Une installation du procédé d'assistance sonore sur le terminal (non illustré) ;
- Une installation d'un traitement sur le terminal (non illustré);
- Une mise à jour d'un traitement sur le terminal (non illustré).

En effet, l'interface d'assistance sonore, notamment, placée en superposition de l'interface de contrôle peut être générée de différentes façons :
Une première solution consiste à précalculer l'ensemble des données de l'interface d'assistance sonore (notamment des informations d'association des contrôleurs de sélection et des déclencheurs de reproduction de données descriptives de sous-traitements associés) à partir des données de l'interface de contrôle (notamment des informations d'association des contrôleurs de sélection et des déclencheurs d'exécution de sous-traitements associés). L'interface d'assistance sonore est générée a priori au moment de la génération de l'interface de contrôle du traitement. Ainsi, chaque dispositif de traitement disposerait de son propre dispositif d'assistance sonore embarqué lors de sa fabrication.

Une deuxième solution consiste à générer à la volée une nouvelle fenêtre d'interface d'assistance sonore à partir d'une analyse rapide de la fenêtre d'interface de contrôle affichée et ceci lors de l'exécution du traitement contrairement à la méthode précédente qui impliquait la génération de l'interface d'assistance sonore lors de la conception du procédé de traitement). Cette analyse parcourt la hiérarchie, notamment graphique, des contrôleurs de sélection de la fenêtre de l'interface de contrôle pour extraire les contrôleurs associés à une reproduction sonore de données descriptives ou évènement sonore. A partir de la position finale de chaque contrôleur dans l'interface de contrôle, une représentation de l'interface d'assistance sonore est générée et affichée en superposition de la fenêtre initiale de l'interface de contrôle.

En particulier, la génération gen de l'interface d'assistance sonore comporte un stockage ias_mem dans le terminal en association avec le traitement de l'interface d'assistance sonore générée AS_BDD, permettant qu'une activation ultérieure de l'assistance sonore pour l'interface de contrôle du traitement déclenche la mise en oeuvre de l'interface d'assistance sonore stockée en association avec le traitement.

En particulier, le procédé d'assistance sonore PAS comporte une fourniture act_ias d'une interface d'assistance sonore ias(tt) adapté au traitement en cours d'exécution. Eventuellement, la fourniture de l'interface d'assistance sonore act_ias est délenchée par l'activation de l'assistance sonore exe(as). L'interface d'assistance sonore est alors active.

En particulier, le procédé d'assistance sonore PAS comporte une reproduction d'une interface d'assistance sonore orpr(ias) pour le traitement en cours d'exécution, l'interface d'assistance sonore ayant été générée à partir d'une modification uniquement des contrôleurs de sélection de l'interface de contrôle active. Par exemple l'activation de l'assistance sonore exe(as) déclenche la reproduction de l'interface d'assistance sonore orpr(ias).

Notamment, l'interface d'assistance sonore est reproduite orpr(ias) pour le traitement en cours d'exécution à la place de l'interface de contrôle active rpr(ic). Par exemple, soit le déclenchement *ias_trg* de la reproduction de l'interface d'assistance sonore orpr(ias), soit la reproduction de l'interface d'assistance sonore orpr(ias) déclenche l'arrêt de la fourniture de l'interface de contrôle rpr(ic), notamment de sa reproduction. L'interface de contrôle ic du traitement exécuté est alors inactive.

En particulier, le procédé d'assistance sonore PAS comporte une reproduction d'une interface d'assistance sonore orpr(ias) en superposition à l'interface de contrôle active reproduite. Ainsi, l'interface d'assistance sonore reproduite est active, et l'interface de contrôle reproduite sous l'interface d'assistance sonore est aussi éventuellement active. Sur la figure 1b, la reproduction rpr(ic+onc) de l'interface de contrôle est hachuré pour représenter le fait que l'interface de contrôle reproduite peut être désactivé pendant la reproduction de l'interface d'assistance sonore orpr(ias).

L'utilisateur peut ainsi facilement basculer de l'interface de contrôle à l'interface d'assistance et inversement évitant la génération d'une interface spécifique comportant la génération de nouveaux contrôleurs spécifiques pour l'interface d'assistance sonore donc réduisant les couts de calculs de génération lié à l'assistance sonore et les besoins en ressources notamment de stockage d'interface d'assistance sonore.

En particulier, dans le cas d'une interface graphique, l'interface d'assistance sonore ias est générée à partir de l'interface de contrôle ic(tt) dans laquelle le remplacement rplc dans un contrôleur iccₖ comporte en outre l'ajout de données graphiques dg⁺ₖ aux données graphiques associées dgₖ au contrôleur modifié iasc'ₖ par ce remplacement. Ainsi, les données graphiques modifiées (dgₖ,dg⁺ₖ) reproduites sur l'interface de contrôle modifiée ic' par l'assistance sonore lors du remplacement rplc permettent à l'utilisateur d'identifier le(s) contrôleur(s) pour le(s)quel(s) une assistance sonore est fournie.

Ainsi, une nouvelle fenêtre de l'interface d'assistance sonore affichée en superposition de la fenêtre initiale de l'interface de contrôle et générée par l'une ou l'autre des méthodes suscitées contient :
- Les règles initiales d'interaction dans le traitement qui vont permettre de distinguer celles qui concernent :
   ∘ Les actions sur un contrôleur de sélection (ou élément graphique) spécifique dont l'exécution est inhibée durant l'assistance sonore ;
   ∘ Les actions qui vont permettre de se déplacer dans l'interface de contrôle/d'assistance sonore du traitement (de faire défiler) et qui sont conservées à l'identique durant l'assistance sonore
- Et/ou des indicateurs des contrôleurs de sélection associés à une reproduction sonore de données descriptives
- Et/ou des données graphiques additionnelles des contrôleurs de sélection sur l'interface d'assistance sonore (contour des contrôleurs de sélections ou halo ou icône spécifique incitant l'utilisateur à l'écoute...).

La notion de déplacement dans le traitement ou service fait référence à des déplacements dans la page ou dans l'interface active du traitement (interface de contrôle ou interface d'assistance sonore) par manipulation d'une zone de la fenêtre et non d'un contrôleur de sélection correspondant généralement à une cellule/zone précise d'une interface graphique, cette dernière faisant référence à un élément texte, un bouton, ou une icône par exemple. La notion de déplacement permet de rendre visible une partie de l'interface active non visible par défaut (ex : accès à des éléments dans une liste, à des menus, des onglets fonctionnels notamment en effleurant un terminal mobile en partant d'un de ses bords vers le côté opposé, etc.).

La fenêtre de l'interface d'assistance sonore superposée à la fenêtre d'interface de contrôle peut être affichée sous différentes formes selon les contraintes :
- Un voile avec une forte opacité permettant d'afficher des données graphiques spécifiques ;
- Une image superposée à la fenêtre initiale ne montrant que les contrôleurs de sélection associée à un son, etc.

La fenêtre de l'interface d'assistance sonore superposée à la fenêtre d'interface de contrôle peut afficher tout ou partie des contrôleurs de sélection associés à un évènement sonore. L'affichage d'une page de l'interface d'assistance sonore peut se diviser en plusieurs fenêtres en prenant en compte l'architecture de la page. Chaque fenêtre affiche un focus sur des contrôleurs de sélection spécifiques regroupés par exemple par niveau d'affichage hiérarchiques (en-tête de page, paragraphes, thèmes traités, flèches de déplacement, bouton de sélection, etc.). L'activation automatique du défilement des fenêtres correspondant à une même page pourra se faire au moyen d'un double tap ou double clic ou avec une temporisation paramétrée. L'activation manuelle du défilement pourra se faire par un tap ou clic sur le masque de la fenêtre (c'est-à-dire en dehors des contrôleurs de sélection).

En particulier, l'exécution de l'assistance sonore fournit les données de l'interface d'assistance sonore *ias(tt)* afin que l'interface d'assistance sonore soit activée act_ias et proposée orpr(ias) à l'utilisateur U du terminal. Notamment, l'exécution de l'assistance sonore déclenche *ias*_*trg* une fourniture act_ias des données de l'interface d'assistance sonore qui est alors active.

En particulier, le procédé d'assistance sonore PAS comporte, suite à une activation d'une assistance sonore *as*_*req*, une fourniture offc_prv à l'interface active, en l'occurrence l'interface d'assistance sonore *ias*, d'un contrôleur de désactivation d'assistance offc.

Alors, le procédé d'assistance sonore PAS comporte la fourniture orpr(ias⊃offc) de l'interface d'assistance sonore ias intégrant le contrôleur de désactivation offc.

En particulier, un utilisateur souhaitant une assistance sonore relative à un contrôleur iccₖ de l'interface de contrôle sélectionne le contrôleur correspondant *slct(iasck)* sur l'interface d'assistance sonore fournie ias. Cette sélection *slct(iascₖ)* entraine une exécution du contrôleur modifié exe(iasc'ₖ) par le procédé d'assistance sonore PAS qui déclenche la reproduction rpr(sₖ) sonore du descriptif du sous-traitement associé au contrôleur.

En particulier, le procédé d'assistance sonore comporte une désactivation de l'assistance sonore exe(offc) sur commande du contrôleur de désactivation *offc* fourni par un utilisateur du terminal. Notamment, un utilisateur U du terminal exécutant un traitement demande une désactivation de l'assistance sonore en sélectionnant le contrôleur d'activation slct(offc). La désactivation exe(offc) déclenche alors la fourniture de l'interface de contrôle rpr(ic+onc) du traitement exécuté comportant le contrôleur d'activation d'assistance sonore par le procédé de traitement PT.

Dans un mode de réalisation particulier, le procédé d'assistance sonore est mis en oeuvre sous la forme d'un programme comprenant des instructions de code de programme pour l'exécution des étapes du procédé d'assistance sonore lorsque ledit programme est exécuté par un processeur.

Dans un mode de réalisation particulier, le procédé de traitement est mis en oeuvre sous la forme d'un programme comprenant des instructions de code de programme pour l'exécution des étapes du procédé de traitement lorsque ledit programme est exécuté par un processeur.

L'invention vise les traitements aussi nommés services accessibles sur les terminaux, à l'aide d'interfaces de contrôles telles qu'une interface numérique, en particulier une interface graphique ou tactile. Elle propose un procédé d'assistance sonore de l'interface de contrôle du traitement permettant à l'utilisateur novice notamment un utilisateur ayant des difficultés de lecture : illettrisme, malvoyance... d'explorer les contrôleurs de sélection de l'interface en lui transmettant une information sur le sous-traitement associé à ce contrôleur de sélection par une des données descriptives sonores aussi nommés évènements sonores associés (vocalisation ou sonorité...) pour le guider dans l'utilisation d'un service ou d'un terminal.

Le procédé d'assistance sonore en remplaçant un déclenchement d'une exécution d'un sous-traitement associé à un contrôleur de sélection par un déclenchement d'une reproduction sonore de données descriptives du sous-traitement permet de ne pas déclencher l'action initiale correspondant à un élément d'interaction (ou contrôleur de sélection).

Le procédé d'assistance sonore permet de conserver et de ne pas entrer en conflit avec les principes de navigation définis initialement dans un traitement, plus précisément dans une interface de contrôle du traitement (par clic, glissement, pression, etc.) en proposant une activation/désactivation d'assistance au niveau de l'interface active du traitement permettant de basculer de l'interface de contrôle du traitement à une interface proposant une assistance sonore pour au moins un contrôleur (telle qu'une interface d'assistance sonore) et inversement.

Le procédé d'assistance sonore permet de préserver l'accès direct au contrôleur de sélection de l'interface de contrôle associé à des données sonores descriptives sans passer par une écoute séquentielle de des données descriptives des autres contrôleurs de sélection de l'interface de contrôle : en effet, l'utilisateur peut interagir avec l'interface active proposant une assistance sonore pour au moins un contrôleur de sélection en utilisant les règles de défilement initiales du traitement.

Le procédé d'assistance propose une activation/désactivation de l'assistance sonore, notamment au moyen d'une interface d'assistance sonore, à tout moment du déroulement du traitement et pas une activation de type tutoriel global, c'est-à-dire un tutoriel pour tout le traitement et pas seulement pour un des contrôleurs de l'interface.

Le procédé d'assistance n'ayant pas modifié les règles de défilement mais seulement les conséquences d'une sélection d'un contrôleur et fournissant une interface active proposant une assistance sonore en fonction de l'interface de contrôle, l'interface active, telle que l'interface d'assistance sonore se présente éventuellement en plusieurs fenêtres permettant d'alléger la quantité d'information diffusée par une même fenêtre. Le passage d'une fenêtre à l'autre est soit automatisée (déclenchée automatiquement à la fin d'une période de temps prédéterminée ou à la fin d'une étape donnée du traitement exécuté...) ou déclenchée manuellement, par exemple par glissement verticale ou horizontale, sélection d'une page suivante/précédente/indiquée... comme pour l'interface de contrôle.

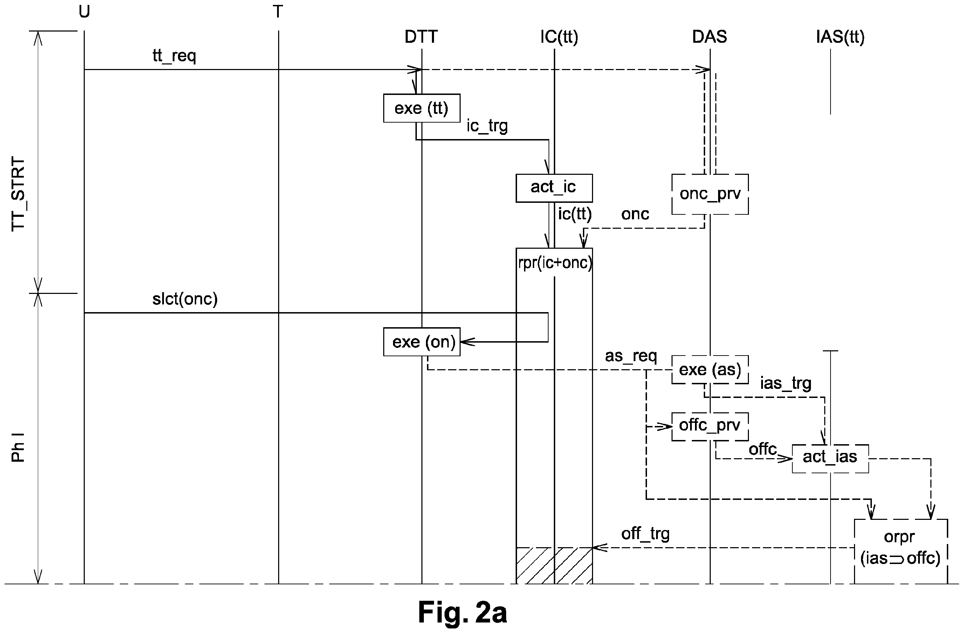

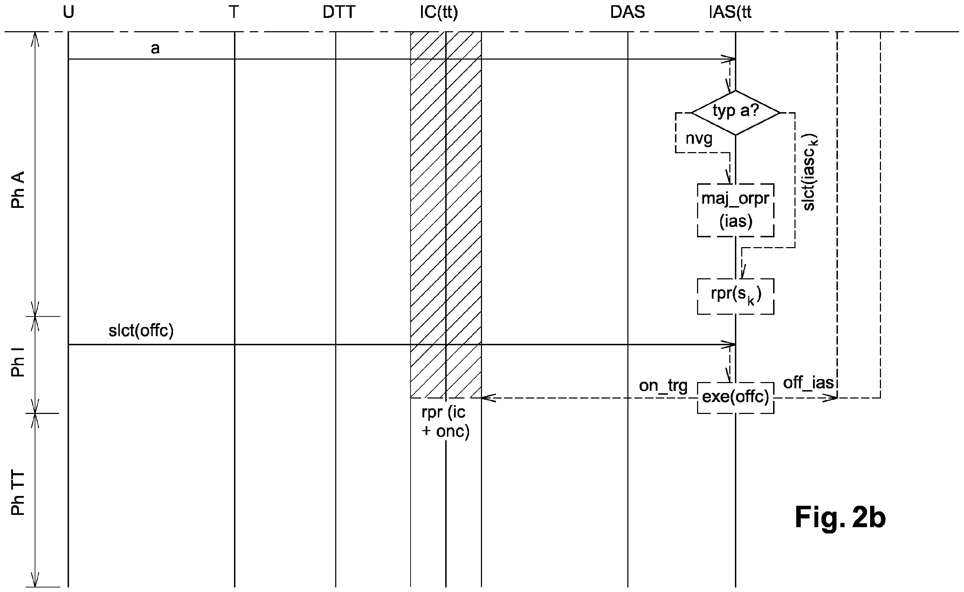

Les figures 2a et 2b illustrent un schéma simplifié des échanges dans un terminal mettant en oeuvre l'invention. Le schéma d'échange est divisé sur les deux figures 2a et 2b. La figure 2a comporte les échanges lors du démarrage de l'exécution d'un traitement par le terminal, lors de l'activation de l'assistant sonore.

Un utilisateur U interagit avec un terminal T au moyen d'une interface de contrôle IC du terminal T. Le terminal T comporte notamment un dispositif de traitement DTT, notamment un processeur mettant en oeuvre un traitement tt. Dans l'exemple des figures 2a et 2b, l'interface de contrôle IC est adaptée au traitement en cours d'exécution tt : Ainsi, l'utilisateur U peut interagir avec le dispositif de traitement au moyen d'une interface de contrôle propre au traitement IC(tt). L'invention propose que le terminal T comporte en outre une assistance sonore DAS. L'utilisateur U interagit avec l'assistant sonore DAS au moyen d'une interface d'assistance sonore adaptée au traitement en cours d'exécution IAS(tt). Ainsi, sur un terminal T proposant plusieurs traitements tt₁...ttₙ exécutés simultanément, l'assistant sonore DAS dispose d'une interface d'assistance sonore par traitement respectivement IAS₁=IAS(tt₁)...IASₙ=IAS(ttₙ) - non illustré.

La figure 2a illustre une première phase TT_STRT durant laquelle un dispositif de traitement DTT du terminal T est démarré. Un utilisateur U requiert la mise en oeuvre d'un traitement tt_req notamment en sélectionnant un contrôleur de sélection d'une interface de contrôle du terminal T (non illustré), notamment le lancement d'une application sur un smartphone, une tablette. Le dispositif de traitement DTT exécute le traitement exe(tt), notamment un processeur du terminal exécute le traitement. Cela déclenche ic_trg l'activation d'une interface de contrôle adaptée au traitement act_ic. L'interface de contrôle IC(tt) s'activant act_ic fournit notamment des données d'interface de contrôle : par exemple, les données d'association adaptée au traitement entre les contrôleurs de sélection de l'interface de contrôle IC du terminal T et des déclencheurs d'exécution de sous-traitements sstₖ du traitement exécuté tt. L'interface de contrôle IC(tt) fournit rpr(ic) alors une interface de contrôle adapté au traitement en cours d'exécution.

Par exemple, l'interface de contrôle est affiché sur l'écran du smartphone avec des éléments d'interface ou contrôleurs de sélection sous forme d'au moins un des éléments suivants:
- boutons,
- labels de menus,
- messages d'information
- en-têtes de page...

Durant cette première phase, suite au déclenchement tt_req de l'exécution d'un traitement activant une interface de contrôle act_ic, l'assistant sonore DAS selon l'invention fournit un contrôleur d'activation d'assistance onc_prv à l'interface de contrôle IC(tt). L'interface de contrôle IC(tt) fournit rpr(ic) alors une interface de contrôle adapté au traitement en cours d'exécution comportant un contrôleur d'activation d'assistance.

Ainsi, pour tout traitement en cours d'exécution, l'interface de contrôle proposera un contrôleur permettant d'activer l'assistance sonore. Cela évite à l'utilisateur de retourner au paramétrage du terminal pour activer l'assistance sonore. L'assistance sonore pouvant être activée plus simplement, l'interface d'assistance nécessite moins de contrôleurs donc moins de ressources en termes de calculs et de stockage.

Dans une deuxième phase dite d'activation Ph I, l'utilisateur U requiert l'activation de l'assistance pour le traitement en cours d'exécution en utilisant slct(onc) le contrôleur d'activation onc de l'interface de contrôle IC(tt). Par exemple, l'utilisateur déclenche l'activation de l'assistance sonore par :
- détection de proximité et/ou de mouvement,
- en fonction de la distance par rapport à l'écran (par exemple, un malvoyant se rapprochant de l'écran pour mieux distinguer les écritures déclenchera l'activation de l'assistance sonore...),
- détection de souffle (par exemple, un utilisateur soufflant sur l'écran en faisant des efforts pour lire les libellés pour diverses raisons : malvoyance, illettrisme, complexité du traitement... déclenchera l'activation de l'assistance sonore),
- par sélection d'un contrôleur de sélection dédié ou contrôleur d'activation onc (ex : bouton...)

Le dispositif de traitement DTT exécute le contrôleur d'activation exe(onc) et requiert l'assistance sonore as_req à l'assistant sonore DAS qui active l'assistance sonore exe(as). L'activation de l'assistance sonore exe(as) par l'assistant sonore DAS déclenche l'interface d'assistance sonore ias_trg qui active act_ias l'interface d'assistance sonore IAS pour le traitement en cours d'exécution.

En parallèle, la requête d'assistance sonore as_req déclenche la fourniture d'un contrôleur de désactivation d'assistance offc_prv par l'assistant sonore DAS. L'assistance sonore DAS fournit le contrôleur de désactivation d'assistance offc à l'interface d'assistance sonore IAS(tt).

L'interface d'assistance sonore IAS(tt) fournit orpr(ias⊃offc) alors une interface d'assistance sonore adaptée au traitement exécuté, notamment en reproduisant l'interface d'assistance sonore. Cette fourniture de l'interface d'assistance sonore adaptée déclenche off_trg éventuellement la désactivation de l'interface de contrôle IC(tt) du traitement exécuté.

La figure 2b comporte les échanges lorsque l'assistant sonore est actif, lors et après l'arrêt de l'assistant sonore.

Dans une troisième phase dite d'assistance active Ph A, l'interface est en attente d'une interaction de l'utilisateur. Puis, lorsque l'utilisateur U effectue une action a sur l'interface d'assistance sonore IAS(tt), le dispositif d'assistance sonore effectue une tâche. Suivant le type d'action *typ a ?*, le dispositif d'assistance sonore DAS effectue soit une mise à jour de la fourniture de l'interface d'assistance sonore maj_orpr(ias) dans le cas d'une action de défilement nvg, soit une reproduction sonore rpr(sₖ) de données descriptives sₖ associées au contrôleur dans le cas d'une action de sélection slct(iascₖ).

Dans le cas de la reproduction sonore, le dispositif d'assistance sonore fait notamment appel aux librairies des évènements sonores ou à la base de données d'assistances dans laquelle chaque contrôle de sélection est associé à un déclenchement d'une reproduction sonore de données descriptives. Cette reproduction sonore ou évènement sonore est soit spécifique au traitement exécuté soit standard (c'est-à-dire commun à plusieurs traitements). Puis, le dispositif d'assistance sonore lit l'évènement sonore c'est dire qu'il reproduit de manière sonore les données descriptives avec éventuellement une écriture dans une mémoire temporaire (mémoire cache) du terminal des données descriptives afin de ne pas avoir à les rechercher dans les librairies si l'utilisateur souhaite les réécouter durant cette phase d'assistance Ph A.

Ainsi, l'interface d'assistance sonore IAS propose une modification de l'interface de contrôle IC uniquement pour un ou plusieurs contrôleurs de sélection. Pour une action de défilement sur l'interface d'assistance sonore IAS, le résultat sera un défilement dans le sens demandé éventuellement la fourniture de la page suivante ou précédente de l'interface d'assistance sonore relative à la page suivante ou précédente de l'interface de contrôle.

Ces étapes peuvent être renouvelées autant de fois que requis par l'utilisateur U pour les différentes actions possibles sur l'interface d'assistance sonore IAS(tt) tant que l'interface d'assistance sonore est active.

Durant une phase de désactivation Ph I, un utilisateur U requiert la désactivation de l'assistance sonore slct(offc) à l'interface d'assistance sonore IAS. L'assistant sonore DAS exécute la désactivation exe(offc) arrêtant la fourniture orpr(ias) de l'interface d'assistance sonore ias et, le cas échéant, activant la fourniture rpr(ic+onc) de l'interface de contrôle permettant de démarrer la phase de traitement.

De même que l'activation, la désactivation peut être déclenchée par détection de proximité/éloignement et/ou de mouvement, de distance par rapport à l'écran, de souffle ou par la sélection d'un bouton dédié (contrôleur de désactivation), etc.

Le terminal est alors en phase de traitement Ph TT durant laquelle l'utilisateur peut interagir avec le dispositif de traitement DTT au moyen de l'interface de contrôle IC selon les règles définies par le traitement.

L'utilisateur U peut réactiver et désactiver à volonté l'assistance sonore durant toute l'exécution de chaque traitement exécutable par le terminal permettant ainsi de passer après une phase de traitement Ph TT à une phase d'activation Ph I, une phase d'assistance Ph A, une phase de désactivation, puis à nouveau une phase de traitement Ph TT à une phase d'activation Ph I, une phase d'assistance Ph A, une phase de désactivation...

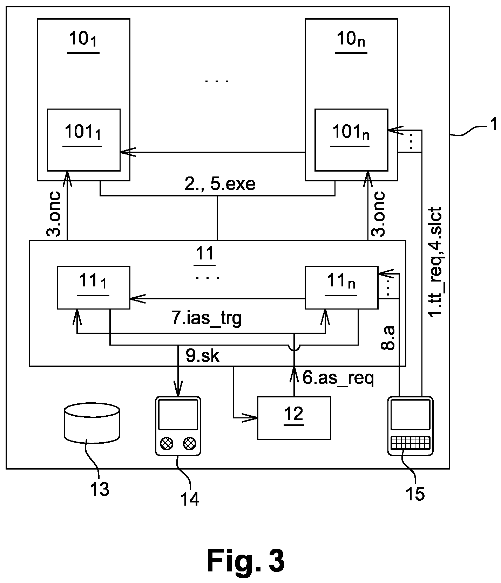

La figure 3 illustre un schéma simplifié d'un terminal comportant un assistant sonore selon l'invention.

Le terminal 1 comporte :
- un processeur 12 exécutant au moins un traitement ;
- au moins une interface de contrôle 101₁... 101ₙ d'un des au moins un traitement ; et
- un assistant sonore 11 d'interface de contrôle, l'assistance sonore 11 fournissant, suite au déclenchement d'une exécution par le terminal 1 d'un traitement activant une interface de contrôle permettant à un utilisateur du terminal 1 d'interagir avec le traitement exécuté, à l'interface de contrôle active un contrôleur d'activation d'assistance permettant à l'utilisateur du terminal 1 d'activer une assistance sonore adaptée à l'interface de contrôle active.

En particulier, le terminal 1 comporte un ou plusieurs dispositifs de traitement 10₁...10ₙ. Le dispositif d'un traitement 10₁...10ₙ déclenche notamment l'exécution du traitement par le processeur 12.

En particulier, l'assistant sonore 11 comporte au moins une interface d'assistance sonore adapté à chaque traitement 11₁...11ₙ.

En particulier, le terminal 1 comporte une interface de saisie 15 tel qu'un écran tactile, un clavier, une souris... permettant de commander l'interface d'assistance sonore adaptée à chaque traitement 11₁...11ₙ.

En particulier, le terminal comporte une interface de reproduction 14 permettant de fournir l'interface de contrôle 101₁...101ₙ et l'interface d'assistance sonore 11₁...11ₙ.

En particulier, le terminal 1 comporte au moins une mémoire 13 dans laquelle sont stockées les données des interfaces de contrôle et/ou des interfaces d'assistance sonore.

Par exemple, l'utilisateur requiert 1.tt_req au moyen de l'interface de saisie 15 l'exécution d'un traitement qui déclenche le démarrage du dispositif de traitement 10₁...10ₙ correspondant. Le dispositif de traitement 10₁...10ₙ active l'interface de contrôle 101₁...101ₙ. Le démarrage du dispositif de traitement 10₁...10ₙ, en particulier l'activation de son interface de contrôle 101₁...101ₙ, déclenche 2. une fourniture d'un contrôleur d'activation 3.onc par l'assistant sonore 11 à l'interface de contrôle 101₁...101ₙ.

Si l'utilisateur sélectionne 4.slct au moyen de l'interface de saisie 15 le contrôleur d'activation d'assistance onc de l'interface de contrôle 101₁...101ₙ, l'interface de contrôle 101₁...101ₙ active l'assistance sonore 5.exe.

L'assistant sonore 11 fournit alors une interface d'assistance sonore 11₁...11ₙ adaptée au traitement exécuté. Par exemple, l'assistant sonore 11 utilise le processeur 12 du terminal 1 pour mettre en oeuvre l'assistance sonore et requérir 6.as_req l'activation de l'assistance sonore par l'assistant sonore 11 qui fournit l'interface d'assistance sonore 7.ias_trg.

L'utilisateur peut alors effectuer une action 8.a relativement à l'interface d'assistance sonore 11₁...11ₙ adaptée au traitement exécuté. Cette action 8.a déclenche une reproduction sonore des données descriptives 9.sₖ du sous-traitement associé au contrôleur sélectionné par l'action notamment au moyen de l'interface de reproduction 14 comportant au moins un ou plusieurs haut-parleurs.

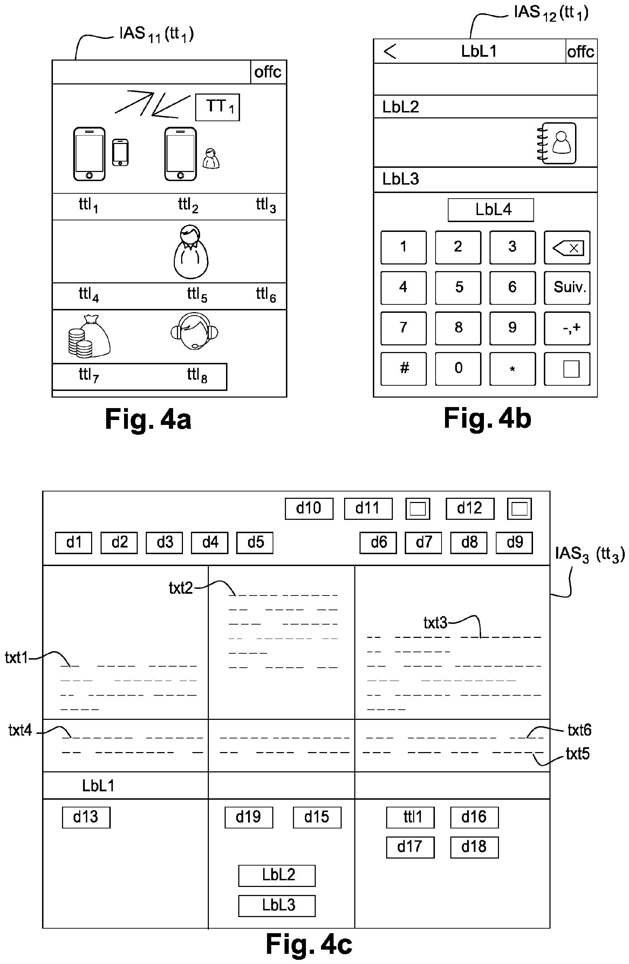

Les figures 4a, 4b et 4c illustrent des exemples d'interfaces d'assistance sonore selon l'invention. Les figures 4a et 4b représentent deux pages différentes d'une même interface d'assistance sonore pour un traitement de type application pour smartphone.

Le procédé d'assistance sonore est mis en oeuvre pour l'interface de contrôle active (généralement l'interface de contrôle affiché, voire la fenêtre affichée de l'interface de contrôle). Lorsque l'assistance sonore est :
- active : une interface d'assistance sonore est placée en superposition sur la fenêtre courante de l'interface de contrôle et permet à l'utilisateur une découverte sonore des différentes éléments de la fenêtre courante de l'interface de contrôle comme illustrées par les figures 4a à 4c;
- non active : l'utilisateur interagit avec une interface de contrôle du traitement selon des règles d'interactions initiales prédéfinies (c'est-à-dire les associations entre un contrôleur de sélection et une exécution d'un sous-traitement associé).

Les figures 4a et 4b représente deux pages IAS₁₁ et IAS₁₂ d'une interface d'assistance sonore IAS1 du même traitement tt₁. Sur ces deux pages IAS₁₁ et IAS₁₂, l'interface d'assistance sonore IAS1 comporte un contrôleur de désactivation offc. L'interface d'assistance sonore IAS1 est reproduite en superposition à l'interface de contrôle du traitement tt₁.

Les contrôleurs de sélection pour lesquels une assistance sonore est disponible sont reproduits non voilés alors que les contrôleurs de sélection pour lesquels une assistance sonore n'est pas disponible sont reproduits voilés.

Ainsi, la page IAS₁₁ fournit une assistance sonore pour 5 sous-traitements nommés ttl₁, ttl₂, ttl₅, ttl₇, ttl₈ mais pas pour les 3 autres sous-traitements de l'interface de contrôle nommés ttl₃, ttl₄, et ttl₆. Et, la page IAS₁₂ fournit une assistance sonore pour 3 sous-traitements dont le libellé lbl₁, lbl₂, lbl₃ mais pas pour le sous-traitement libellé lbl₄.

La figure 4c illustre une interface d'assistance sonore IAS₃(tt₃) d'une page internet affichée par un navigateur sur une tablette ou un ordinateur. Cette page est constituée de textes txt₁... txt₆, de libellé lbl₁, de titres ttl₁ et de données descriptives d₁...d₁₈.

Les contrôleurs de sélection pour lesquels une assistance sonore est disponible sont reproduits encadrés (par notamment, les contrôleurs de sélection associés aux données descriptives d₁...d₇, textes txt₁...txt₃, etc. sachant que l'interface de contrôle est voilée.

Le procédé d'assistance est intégrable à des interfaces de services d'accès à l'information, de transaction, de jeu... pour des situations d'usages sur terminaux nomades (tablettes, smartphone).

L'invention vise aussi un support. Le support d'informations peut être n'importe quelle entité ou dispositif capable de stocker au moins l'un des programmes selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé d'assistance sonore d'interface de contrôle d'un terminal, ledit procédé d'assistance sonore comporte, suite au déclenchement d'une exécution par le terminal d'un traitement activant une interface de contrôle permettant à un utilisateur du terminal d'interagir avec le traitement exécuté, une fourniture à l'interface de contrôle active d'un contrôleur d'activation d'assistance permettant à l'utilisateur du terminal d'activer une assistance sonore adaptée à l'interface de contrôle active.

2. Procédé d'assistance sonore selon la revendication précédente, **caractérisé en ce que** le procédé d'assistance sonore comporte, suite à une activation d'une assistance sonore d'une interface de contrôle active d'un traitement exécuté par le terminal, une fourniture à une interface active du traitement exécuté d'un contrôleur de désactivation d'assistance permettant à l'utilisateur du terminal de désactiver l'assistance sonore de l'interface de contrôle du traitement exécuté.

3. Procédé d'assistance sonore selon l'une quelconque des revendications précédentes, **caractérisé en ce que** le procédé d'assistance sonore comporte, suite à une activation d'une assistance sonore, un remplacement, uniquement et au moins pour l'un des contrôleurs de sélection de l'interface de contrôle active, d'un déclenchement d'une exécution d'un sous-traitement associé au contrôleur de sélection de l'interface de contrôle active par un déclenchement d'une reproduction sonore de données descriptives relatives au sous-traitement associé au contrôleur de sélection.

4. Procédé d'assistance sonore selon l'une quelconque des revendications précédentes, **caractérisé en ce que** le procédé d'assistance sonore comporte une génération d'une interface d'assistance sonore à partir d'une modification uniquement des contrôleurs de sélection de l'interface de contrôle active.

5. Procédé d'assistance sonore selon l'une quelconque des revendications précédentes, **caractérisé en ce que** la génération d'une interface d'assistance sonore pour une interface de contrôle d'un traitement est déclenchée dès qu'au moins un des événements suivants se produit:
• Une activation d'une assistance sonore à partir d'une interface de contrôle d'un traitement ;
• Une installation du procédé d'assistance sonore sur le terminal ;
• Une installation d'un traitement sur le terminal ;
• Une mise à jour d'un traitement sur le terminal.

6. Procédé d'assistance selon la revendication précédente, **caractérisée en ce que** la génération de l'interface d'assistance sonore comporte un stockage dans le terminal en association avec le traitement de l'interface d'assistance sonore générée, permettant qu'une activation ultérieure de l'assistance sonore pour l'interface de contrôle du traitement déclenche la mise en oeuvre de l'interface d'assistance sonore stockée en association avec le traitement.

7. Procédé d'assistance sonore selon l'une quelconque des revendications précédentes, **caractérisé en ce que** le procédé d'assistance sonore comporte une activation de l'assistance sonore sur commande d'un utilisateur du terminal déclenchant une reproduction d'une interface d'assistance sonore pour le traitement en cours d'exécution, l'interface d'assistance sonore ayant été générée à partir d'une modification uniquement des contrôleurs de sélection de l'interface de contrôle active.

8. Procédé d'assistance sonore selon l'une quelconque des revendications précédentes, **caractérisé en ce que** le procédé d'assistance sonore comporte une activation de l'assistance sonore sur commande d'un utilisateur du terminal déclenchant une reproduction d'une interface d'assistance sonore en superposition à l'interface de contrôle active reproduite, l'interface d'assistance sonore ayant été générée à partir d'une modification uniquement des contrôleurs de sélection de l'interface de contrôle active.

9. Procédé d'assistance sonore selon l'une quelconque des revendications précédentes, **caractérisé en ce que** l'interface de contrôle est au moins d'un des types suivants:
• Une interface visuelle,
• Une interface graphique.

10. Procédé de traitement apte à être exécuté par un terminal, le procédé de traitement comportant une activation d'une interface de contrôle d'un terminal permettant à un utilisateur du terminal d'interagir avec le procédé de traitement exécuté, **caractérisé en ce que** le procédé de traitement comporte, suite au déclenchement d'une exécution par le terminal du procédé de traitement, une fourniture à l'interface de contrôle active d'un contrôleur d'activation d'une assistance sonore permettant à l'utilisateur du terminal d'activer une assistance sonore adaptée à l'interface de contrôle active.

11. Programme comprenant des instructions de code de programme pour l'exécution des étapes du procédé d'assistance sonore et/ou du procédé de traitement selon l'une quelconque des revendications précédentes lorsque ledit programme est exécuté par un processeur.

12. Terminal comportant :
• un processeur exécutant au moins un traitement ;
• au moins une interface de contrôle d'un des au moins un traitement ;
**caractérisé en ce que** le terminal comporte un assistant sonore d'interface de contrôle, l'assistance sonore fournissant, suite au déclenchement d'une exécution par le terminal d'un traitement activant une interface de contrôle permettant à un utilisateur du terminal d'interagir avec le traitement exécuté, à l'interface de contrôle active un contrôleur d'activation d'assistance permettant à l'utilisateur du terminal d'activer une assistance sonore adaptée à l'interface de contrôle active.
